Europäisches Patentamt

European Patent Office

Office européen des brevets

(11) Veröffentlichungsnummer: **0 414 203 B1**

## (12) EUROPÄISCHE PATENTSCHRIFT

(45) Veröffentlichungstag der Patentschrift: **30.03.94**

(51) Int. Cl.⁵: **F42C 13/02**

(21) Anmeldenummer: **90115977.2**

(22) Anmeldetag: **21.08.90**

(54) **Vorrichtung für die Zielerkennung und Zündauslösung von abzufeuernden Horizontal-Minen für die Panzerabwehr.**

(30) Priorität: **22.08.89 DE 3927662**

(43) Veröffentlichungstag der Anmeldung:
**27.02.91 Patentblatt 91/09**

(45) Bekanntmachung des Hinweises auf die
Patenterteilung:
**30.03.94 Patentblatt 94/13**

(84) Benannte Vertragsstaaten:
**AT BE CH DE ES FR GB GR IT LI LU NL SE**

(56) Entgegenhaltungen:
DE-A- 3 322 044
DE-A- 3 543 840
DE-A- 3 601 053
DE-A- 3 705 981

(73) Patentinhaber: **SenSys AG**
**Im Ziel 122**
**CH-8434 Kaiserstuhl(CH)**

(72) Erfinder: **Deuss,Matthias**
**Weberstrasse 10**
**D-4040 Neuss 1(DE)**
Erfinder: **Pfaff,Helmut**
**Seydlitzstrasse 18**
**D-4000 Düsseldorf 30(DE)**

(74) Vertreter: **Döring, Wolfgang, Dr. Ing.**
**Mörikestrasse 18**
**D-40474 Düsseldorf (DE)**

**Beschreibung**

Die Erfindung bezieht sich auf eine Vorrichtung für die Zielerkennung und Zündauslösung von abzufeuernden Horizontal-Minen für die Panzerabwehr in einem Zielgebiet mit den Merkmalen des Oberbegriffs des Patentanspruchs 1. Der Begriff "Zündauslösung" bedeutet die Auslösung der Zündung für den Marsch der Horizontal-Mine zum Panzer.

Zur Panzerbekämpfung werden bisher neben den Artilleriewaffen und diesen ähnlichen Waffensystemen Panzerabwehr-Minen verwendet. Panzerabwehr-Minen haben die Eigenschaft, ohne personellen Einsatz über eine lange Zeitspanne hinweg wirksam zu sein und auf diese Weise begrenzte Geländebereiche gegen Panzerzugriff zu schützen bzw. Panzersperrgebiete zu schaffen. Nachteilig ist, daß diese Panzerabwehr-Minen flächendeckend in Breite und Tiefe verlegt werden müssen, um einen wirksamen Schutz zu bieten.

Um bei der Panzerbekämpfung solche flächendeckenden Maßnahmen zu vermeiden, wird der Einsatz von Horizontal-Minen angestrebt. Sie bieten den Vorteil, eine Gelände-Zielgebietstiefe bis zu 100 m wirksam abzudecken. Mit Horizontal-Minen werden Raketen bezeichnet, die aus im Kampffeld fest installierten Werfern abgefeuert werden, wenn ein zu bekämpfender Panzer im Zielfeld in die Schußrichtung kommt. Die Schußrichtung ist ein fester Parameter des installierten Werfers. Die erfindungsgemäße Vorrichtung für die Zielerkennung und Zündauslösung von abzufeuernden Horizontal-Minen wird regelmäßig mit einem derartigen Werfer integriert.

Aus der DE-A-3 705 981 ist eine Vorrichtung mit den Merkmalen des Oberbegriffs des Patentanspruchs 1 bekannt. Die bekannte Vorrichtung besitzt zwei Richtmikrofone, die für Panzergeräusche empfindlich sind, einen Seismiksensor, der für Panzer eigentümliche Seismikwellen empfindlich ist, und eine elektronische Auswerteeinrichtung, wobei die Richtmikrofone mit ihren Richtlinien auf das Zielgebiet gerichtet sind und im spitzen Winkel zueinander stehen, der die Schußrichtung der Horizontal-Mine einschließt. Die Auswerteeinrichtung fragt zunächst den Seismiksensor nach panzereigentümlichen Seismikwellen ab und aktiviert bei panzereigentümlichen Seismikwellen die Richtmikrofone, wobei die Auswerteeinrichtung die von den beiden Richtmikrofonen aufgenommenen Schallwellen und/oder die aufgenommene Schallenergie separat erfaßt, die Phasenverschiebung ermittelt und bei einem Minimum des Wertes der Phasenverschiebung die Zündauslösung betätigt.

Der Erfindung liegt die Aufgabe zugrunde, eine Vorrichtung anzugeben, mit der eine Horizontal-Mine in genau dem Augenblick für die Marschbewegung gezündet werden kann, in dem ein Panzer in Schußrichtung kommt.

Diese Aufgabe wird erfindungsgemäß durch eine Vorrichtung mit den kennzeichnenden Merkmalen des Patentanspruchs 1 gelöst.

Der hier verwendete Begriff "Richtkeule" bezeichnet die verhältnismäßig schmale Empfangscharakteristik eines Infrarotsensors. Der Ausdruck "Korrelation" bezeichnet das Vorliegen eines irgendwie gearteten Zusammenhanges zwischen zwei oder mehreren Zufallsvariablen und seine mathematische Darstellung. Die mathematische Darstellung des Zusammenhanges ist die Korrelationsfunktion. Die Korrelationsfunktion ist ein wesentliches Element der modernen Nachrichtentheorie (Vg. Jaglom "Einführung in die Theorie stationärer Zufallsfunktionen", Berlin 1959). Im vorliegenden Fall sind die Zufallsvariablen die Schallsignale, die von den beiden Mikrofonen aufgenommen werden.

Zur Verdeutlichung der Erfindung seien nachfolgend kurz einige mathematische Grundlagen wiedergegeben:

Die Korrelationsfunktion $K_{12(\tau)}$ zweier Signale $S_1$, $S_2$ läßt sich allgemein wie folgt darstellen:

$$K_{12(\tau)} = \lim_{T \to \infty} \frac{1}{2T} \int_{-T}^{T} S_{1(t)} \cdot S_{2(t+\tau)} \, dt \qquad (1)$$

wobei $\tau$ die Verzögerungszeit zwischen beiden Signalen und T die Integrationszeit ist.

2

EP 0 414 203 B1

Für diskrete Zeitfolgen $S_1(k)$, $S_2(k)$ läßt sich die Korrelationsfunktion darstellen als:

$$K_{12}(k\tau) = \frac{1}{N} \sum_{k=0}^{N-1} S_1(k) \cdot S_2(k+k\tau) \qquad (2)$$

Im vorliegenden Fall wird anstelle der vorstehend wiedergegebenen Korrelationsfunktion (2) der Korrelationskoeffizient berechnet:

$$\rho = \frac{\sum_{k=0}^{N-1} S_1(k) \cdot S_2(k+k\tau)}{\sqrt{\sum_{k=0}^{N-1} S_1^2(k) \sum_{k=0}^{N-1} S_2^2(k)}}$$

mit $-1 \leq p \leq 1$

Der Wert des Korrelationskoeffizienten ist unabhängig von der Amplitude ein Maß für die Ähnlichkeit der Signale $S_1$ und $S_2$.

Zur Ausgestaltung der Mikrofone bestehen erfindungsgemäß mehrere Möglichkeiten. Es können Mikrofone verwendet werden, die keine ausgeprägte Richtcharakteristik besitzen. Die wesentlichen Spektralanteile der verarbeiteten Schallsignale liegen im Bereich von etwa 70 - 200 Hz, so daß eine akustische Richtwirkung bei diesen relativ niedrigen Frequenzen im allgemeinen nicht möglich ist. Natürlich ist bereits durch die Längsachse des Mikrofons eine gewisse Richtcharakteristik vorgegeben.

Zweckmäßigerweise sind die Mikrofone achsparallel auf das Zielgebiet gerichtet, und die Richtkeule des Infrarotsensors verläuft parallel zu den Achsen der Mikrofone.

Insbesondere sind die Mikrofone in einer horizontalen Ebene neben der Horizontal-Mine und der Infrarotsensor oberhalb der Horizontal-Mine zwischen den Mikrofonen angeordnet. Der Abstand der Mikrofone voneinander beträgt vorzugsweise etwa 0,5 m.

Bei einer weiteren Ausführungsform der Erfindung sind die Mikrofone als Richtmikrofone mit ein Zielfeld definierenden Richtcharakteristiken ausgebildet und definieren ein rechteckiges Zielfenster. Solche Richtmikrofone haben im bezug auf die Empfangsempfindlichkeit eine sich kegelförmig ausbreitende Richtcharakteristik, die bei den üblichen Richtmikrofonen symmetrisch ist.

In bezug auf die Betriebsweise empfiehlt die Erfindung, daß im Einsatzfall, d.h. nach Auslegung und Scharfmachen der Horizontal-Mine, in einer ersten Betriebsphase nur eines der Mikrofone und ein Teil der elektronischen Auswerteeinrichtung eingeschaltet sind, bis ein panzertypisches Schallsignal ermittelt wird, wobei die eingeschaltete elektronische Auswerteeinrichtung bei Ermittlung eines panzertypischen Schallsignals das zweite Mikrofon und den übrigen Teil der elektronischen Auswerteeinrichtung einschaltet und wobei die elektronische Auswerteeinrichtung den Infrarotsensor zuschaltet (akustisch frei gibt), wenn der vorgegebene Schwellwert der Korrelation bzw. des Korrelationsgradienten überschritten wird. Diese Ausführungsform dient zum Energiesparen, da hierbei nur ein Teil der Vorrichtung permanent in Betrieb ist.

Die Erfindung wird nachfolgend anhand eines Ausführungsbeispiels in Verbindung mit der Zeichnung im einzelnen erläutert. Es zeigen:

Figur 1      das Schema einer Horizontal-Mine mit erfindungsgemäßer Vorrichtung;
Figur 2      den Strahlengang des Infrarotsensors der Vorrichtung gemäß Figur 1;
Figur 3      die Darstellung einer Horizontal-Mine mit erfindungsgemäßer Vorrichtung im Einsatz;
Figur 4      eine vereinfachte Darstellung einer Horizontal-Mine im Einsatz mit grafischer Darstellung der Schallsignale, der Korrelationsfunktion und des Signals des Infrarotsensors;
Figur 5      die Schallsignale, die in einem speziellen Einsatz von den beiden Mikrofonen aufgenommen worden sind, und zwar im Korrelationsbereich oberhalb des Schwellwertes;
Figur 6      die Korrelationsfunktion zu den Schallsignalen der Figur 5;
Figuren 7, 9      entsprechend Figur 5 Schallsignale, die bei einem anderen Einsatz von den beiden

3

Mikrofonen aufgenommen wurden;

Figuren 8, 10      die Korrelationsfunktionen dazu;

Figur 11      ein Blockschaltbild der Hauptbestandteile der erfindungsgemäßen Vorrichtung; und

Figur 12      ein detailliertes Blockschaltbild der Vorrichtung.

Die in den Figuren dargestellte Vorrichtung besteht aus zwei parallel in Zielrichtung ausgerichteten Mikrofonen (M1, M2), die , ausgerichtet in Zielrichtung, seitlich am Minenkörper 1 befestigt sind, und einem oberhalb des Minenkörpers 1 angebrachten Infrarotsensor S, dessen optische Achse ebenfalls in Zielrichtung ausgerichtet ist.

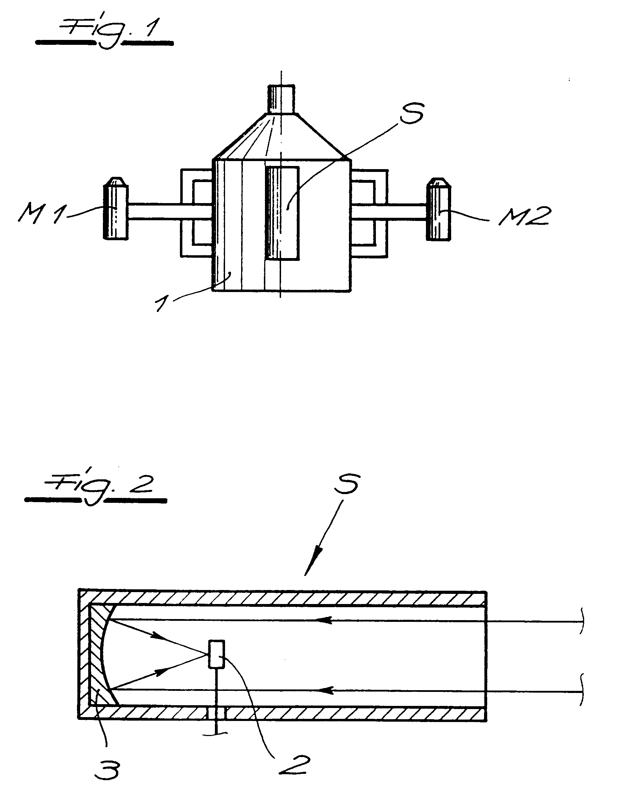

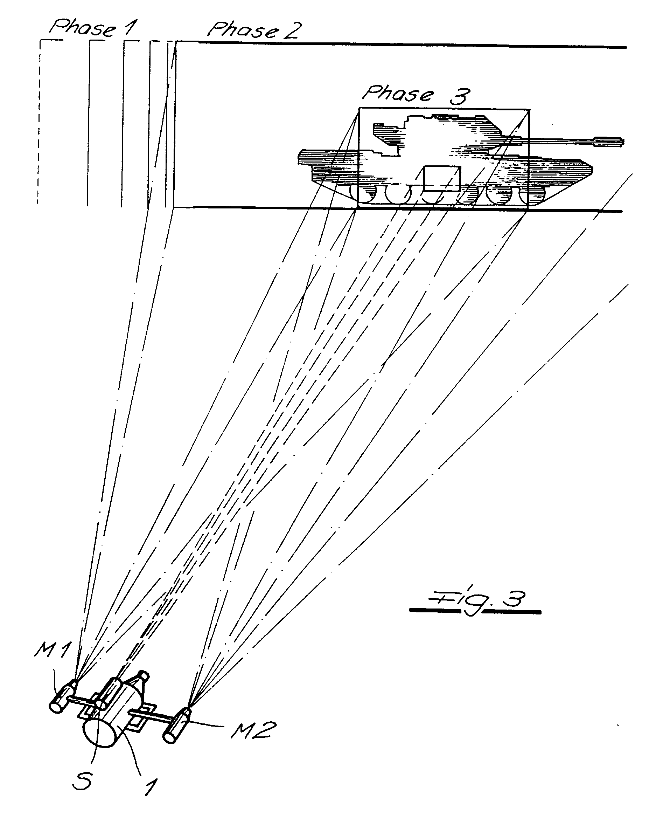

Der Infrarotsensor S besteht im wesentlichen aus einem pyroelektrischen Infrarotdetektor 2, der sich im Brennpunkt eines sphärischen Hohlspiegels 3 befindet. Figur 2 zeigt schematisch den Strahlengang im Sensor S. Der Spiegel 3 konzentriert die aus der Zielrichtung einfallende Wärmestrahlung auf die wirksame Fläche des Detektors 2. Hierdurch wird die vom Detektor 2 empfangene Strahlungsleistung etwa um den Faktor 2000 gegenüber einem nicht verspiegelten System, gesteigert. Der vom Sensor S optisch registrierte Kegel hat z.B. einen Öffnungswinkel von 2/100 Grad. Bei einem Abstand von 50 m hat das "Gesichtsfeld" des Sensors S einen Radius von etwa 0,5 m.

Die akustischen und die optischen Signale werden von der elektronischen Auswerteeinrichtung parallel verarbeitet. Der Funktionsablauf des Systems, von der Zielerkennung bis zur Zündauslösung, läßt sich in drei Phasen unterteilen:

Phase 1:      In dieser "Bereitschaftsphase" ist nur ein Mikrofon und ein Teil der Elektronik in Betrieb. Werden von diesem Mikrofon länger anhaltende Geräusche registriert, die einem für Fahrzeuge typischen Frequenzbereich zuzuordnen sind, so wird die Mine "geweckt".

Phase 2:      In dieser Phase sind beide Mikrofone, der Infrarotsensor und die gesamte Elektronik in Betrieb. Die Mikrofone empfangen akustische Signale von einem sich nähernden Zielobjekt. Die Signale werden digitalisiert und zur Verarbeitung einem Rechner zugeführt, der die Signalwerte einer Korrelationsanalyse unterwirft. Dies bedeutet, daß die von den Mikrofonen M1 und M2 aufgenommenen Signale, die einen Laufzeitunterschied aufweisen, zur Berechnung einer Korrelationsfunktion benutzt werden, die Aufschluß über den "mittleren" Zusammenhang der Signale gibt und damit ein Maß für die strukturelle Verwandschaft beider Signale ist. Der Wert der Korrelationsfunktion ist abhängig vom Laufzeitunterschied beider Signale und damit vom seitlichen Abstand des Zielobjektes von der Schußlinie. Die Korrelationsfunktion erreicht ein Maximum, wenn sich die registrierte Geräuschquelle auf der Schußlinie befindet, d.h. wenn der Laufzeitunterschied null wird. Wenn die Korrelationsfunktion einen definierten Schwellwert überschreitet, d.h. das Zielobjekt sich unmittelbar vor der Schußlinie befindet, geht das System in Phase 3 über.

Phase 3:      In dieser Phase ist die Zündung der Mine "akustisch" freigegeben. Fährt das Zielobjekt in die Schußlinie, so wird es vom Infrarotsensor optisch erfaßt, und der Schuß wird ausgelöst.

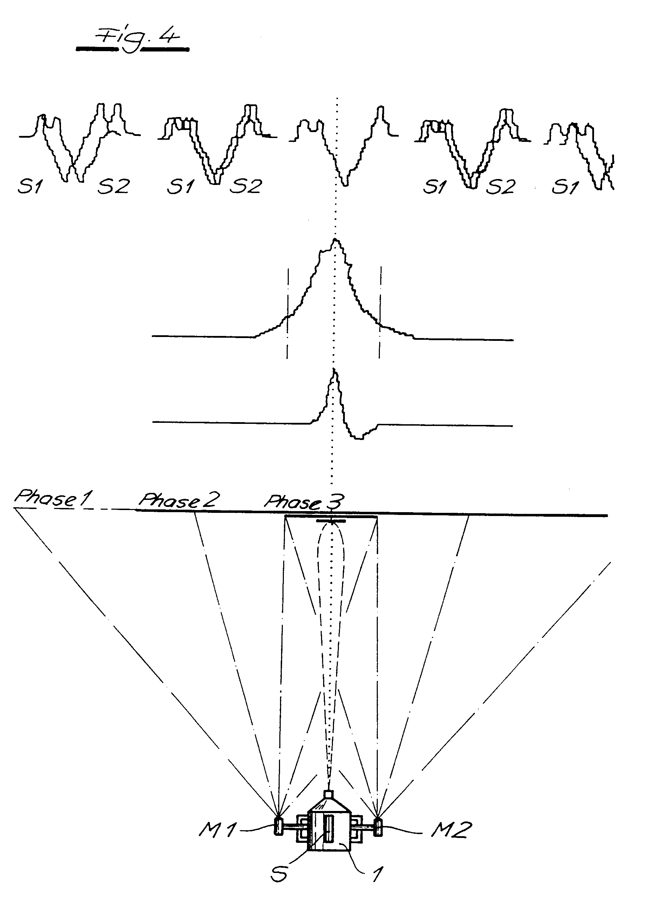

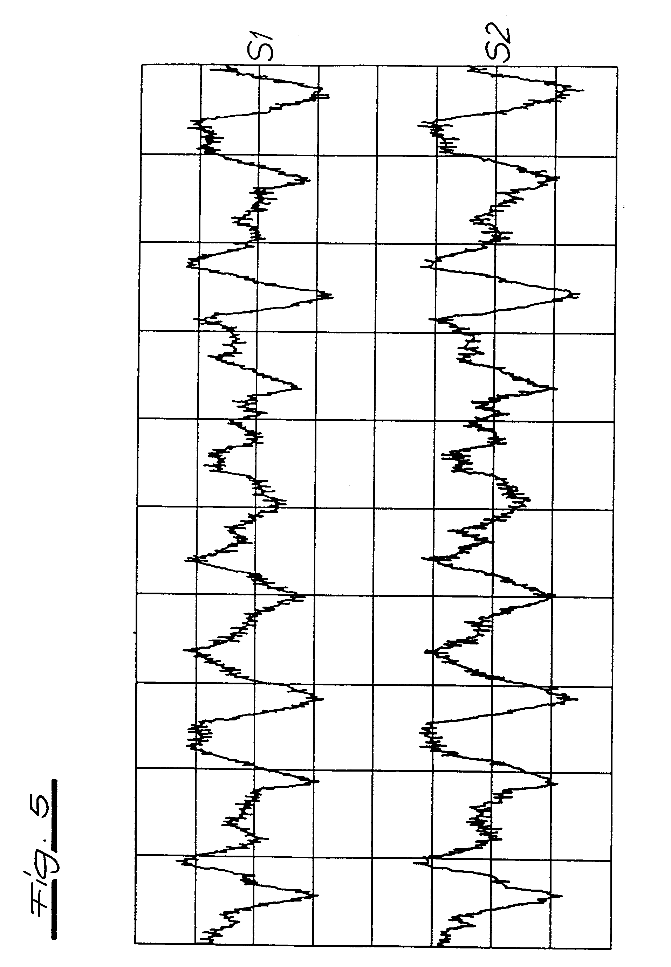

Die Figuren 3 und 4 stellen den hier kurz geschilderten Entscheidungsablauf auf verschiedene Weise grafisch dar. Die Verknüpfung von akustischem und optischem Zündkriterium hat folgende Vorteile: Die hohe Empfindlichkeit und die schmale Richtkeule des Infrarotsensors bieten gegenüber einer rein akustischen Lösung den Vorteil hoher Zielgenauigkeit auf große Entfernung. Die gleichzeitige Einbeziehung eines akustischen Zündkriteriums bietet Sicherheit gegen Fehlauslösung durch den Infrarotsensor, da sie eine Unterscheidung verschiedener infrarotstrahlender Objekte ermöglicht.

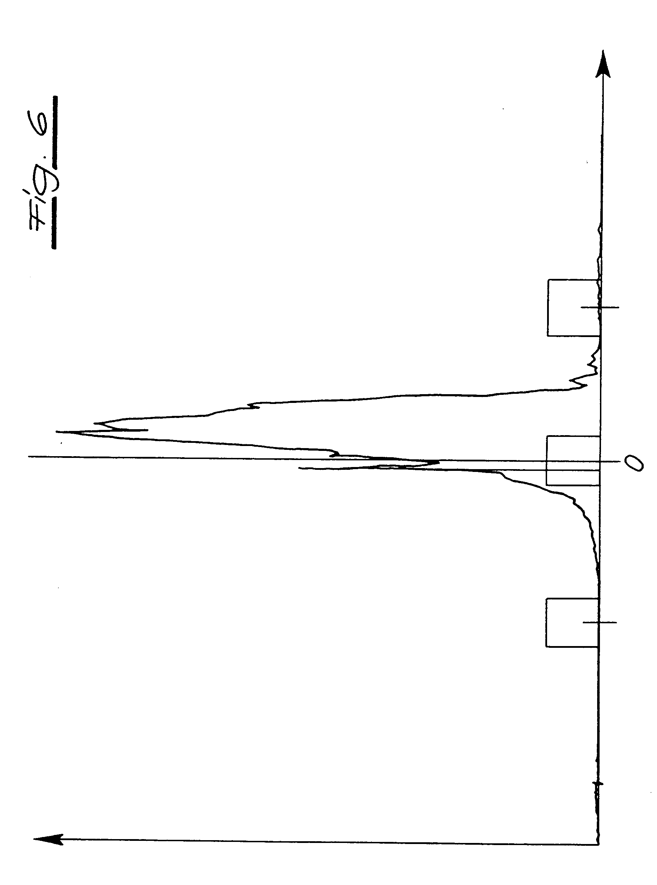

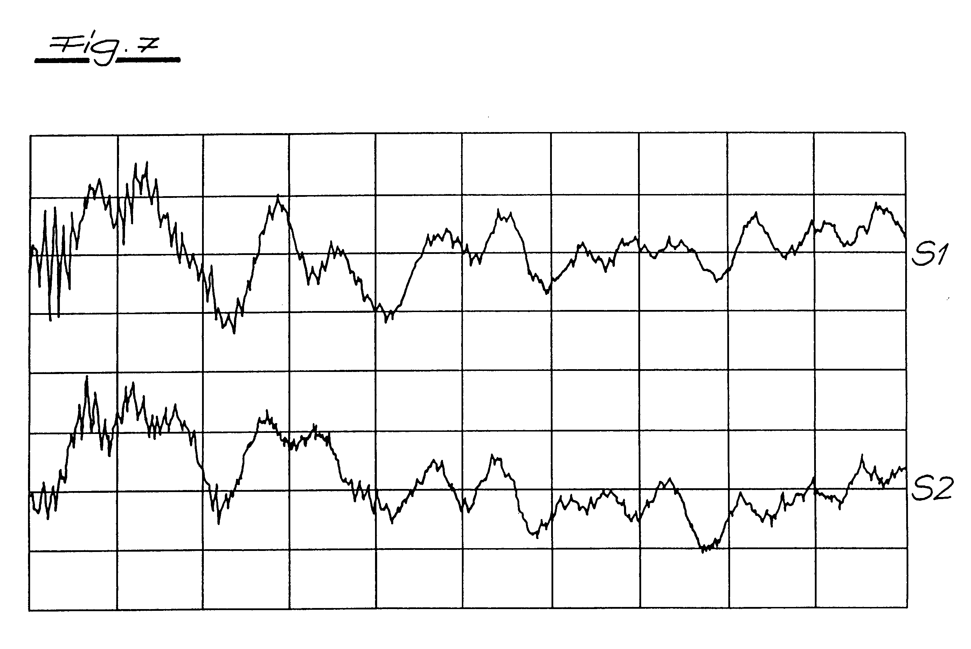

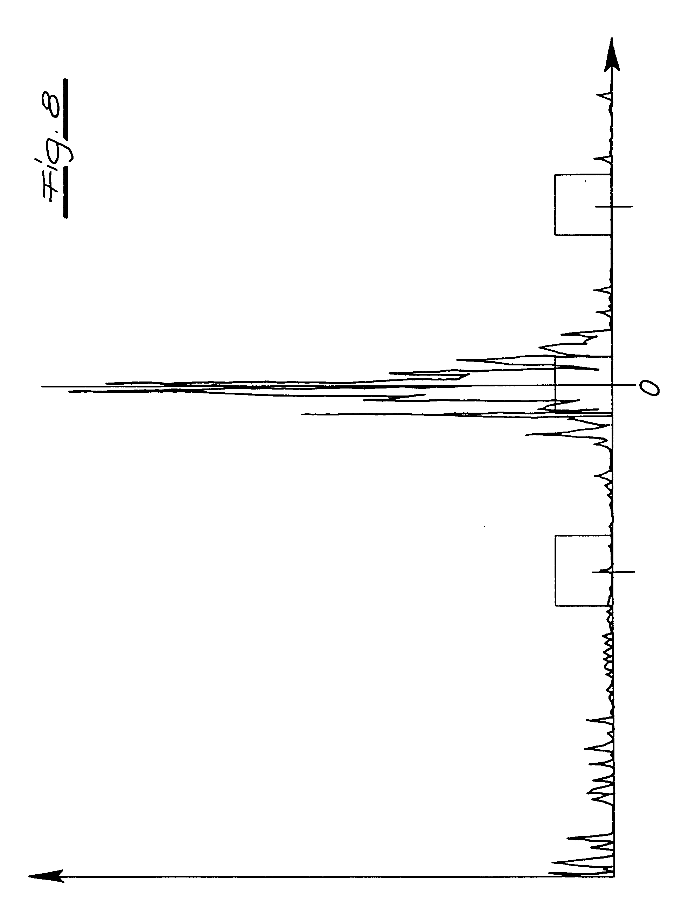

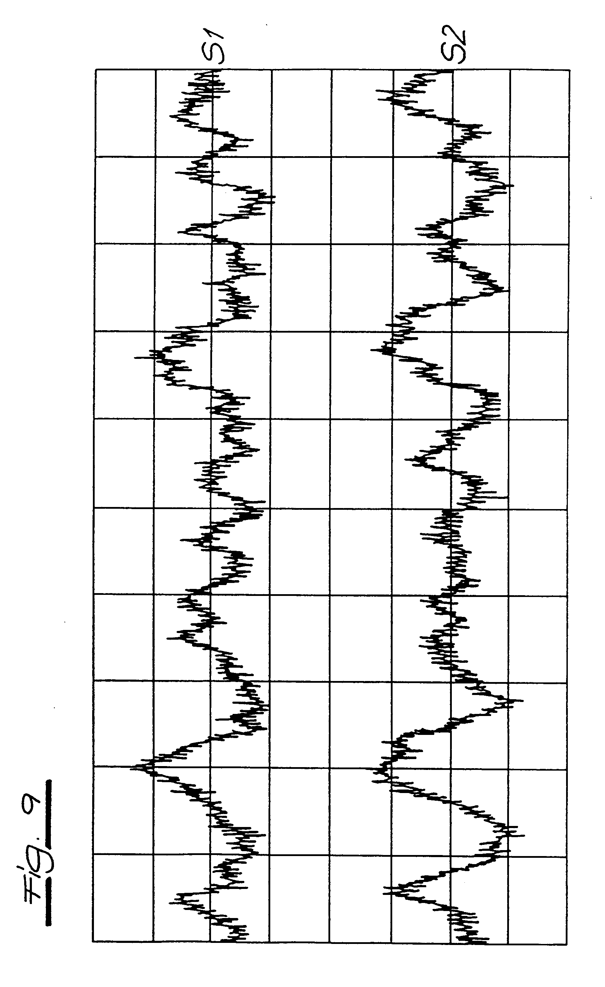

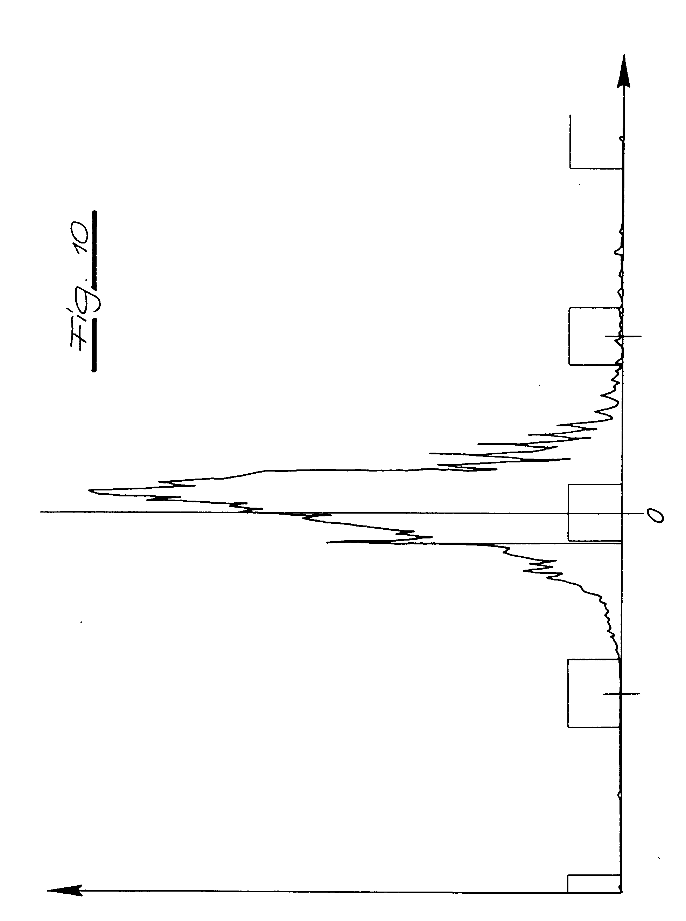

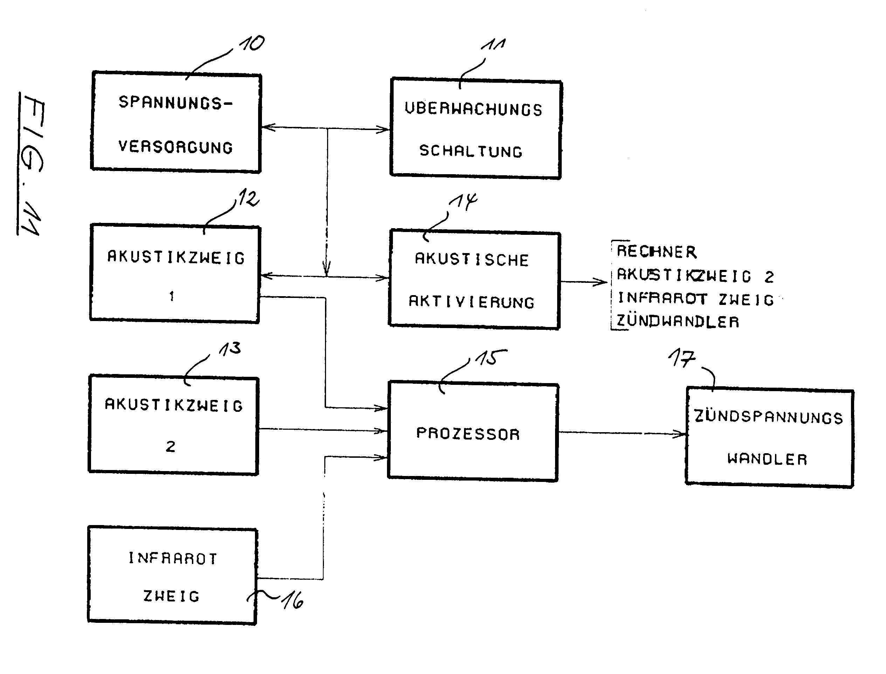

Die folgenden Abbildungen zeigen einige Beispiele für reale Akustik- bzw. Infrarotsignale, außerdem drei Korrelationsfunktionen, die aus den Signalen der vorbei fahrenden Panzer berechnet wurden. Figur 5 zeigt die Signale S1, S2 eines Panzers M 60 bei Durchfahrt durch die Schußlinie. Der Abstand Panzer - Mikrofon betrug bei dieser Aufnahme 30 m, die Fahrtgeschwindigkeit 20 km/h. Die Messung wurde unter sehr günstigen Bedingungen, d.h. ohne wesentlichen Einfluß von Störgeräuschen vorgenommen. Entsprechend zeigen beide Signale einen hohen Grad an Übereinstimmung. Figur 6 zeigt die mit den Signalen des vorbeifahrenden Panzers berechnete Korrelationsfunktion, dargestellt als Funktion des seitlichen Abstandes von der Schußlinie. Die eingezeichneten, rechteckigen Markierungen stellen die Position des Panzers jeweils 25 m rechts und links von der Schußlinie dar. Die mittlere Markierung stellt ein Zielfenster dar, innerhalb dessen sich der Panzer in Zielrichtung befindet. Das Maximum der Korrelationsfunktion befindet sich etwa 3 m hinter dem Nulldurchgang des Panzers (bezogen auf die Panzermitte), also in Höhe des Panzerhecks. Dieses ist darauf zurückzuführen, daß sich die Hauptgeräuschquelle (Auspuffschlitze) beim Panzer M 60 auf der Panzerrückseite befindet. Dieses zeigt die Problematik einer rein akustischen Ortung. Die Ortung ist abhängig von der Lage der Geräuschquelle auf dem Zielobjekt. Eine Zündauslösung im Maximum der Korrelationsfunktion wäre nicht möglich. Die aufsteigende Flanke der Korrelationsfunktion kann jedoch zur "akustischen" Zündfreigabe, d.h. zur Initialisierung der Phase 3, genutzt werden. In der vorliegenden Abbildung ist der Beginn der Phase 3 durch eine senkrechte Markierung, etwa 1 m vor dem Nulldurchgang der Panzermitte, angegeben. Die Entscheidung zur Initialisierung der Phase 3 wird vom Rechner während der Berechnung der Korrelationsfunktion vorgenommen. Die Figuren 7 und 8 zeigen die entsprechenden Darstellungen für einen Schützenpanzer. Bei der Betrachtung dieser Ergebnisse sind zwei Punkte von Bedeutung: Die Signale sind durch Windrauschen stark gestört und zeigen nicht die weitgehende Übereinstimmung wie die M 60-Signale in Figur 5. Die zugehörige Korrelationsfunktion in Figur 8 zeigt dennoch ein eindeutiges Maximum bei Durchfahrt des Panzers durch die Schußlinie. Außerhalb des Hauptmaximums treten in dieser Abbildung kleinere Nebenmaxima hervor, die auf Windstörungen zurückzuführen sind. Die Rechnerentscheidung zur Initialisierung der Phase 3 liegt hier etwa 3 m vor dem Durchgang der Panzermitte durch die Schußlinie. Die Figuren 9 und 10 zeigen die Signale bzw. die Korrelationsfunktion für zwei im Abstand von 25 m hintereinanderfahrende Panzer (M 60/ Kürassier). Die Korrelationsfunktion zeigt gegenüber Figur 5 stärkere Störungen, hervorgerufen durch die Überlagerung der Signale beider Panzer. Phase 3 wird unmittelbar vor dem Zielfenster 3 initialisiert.

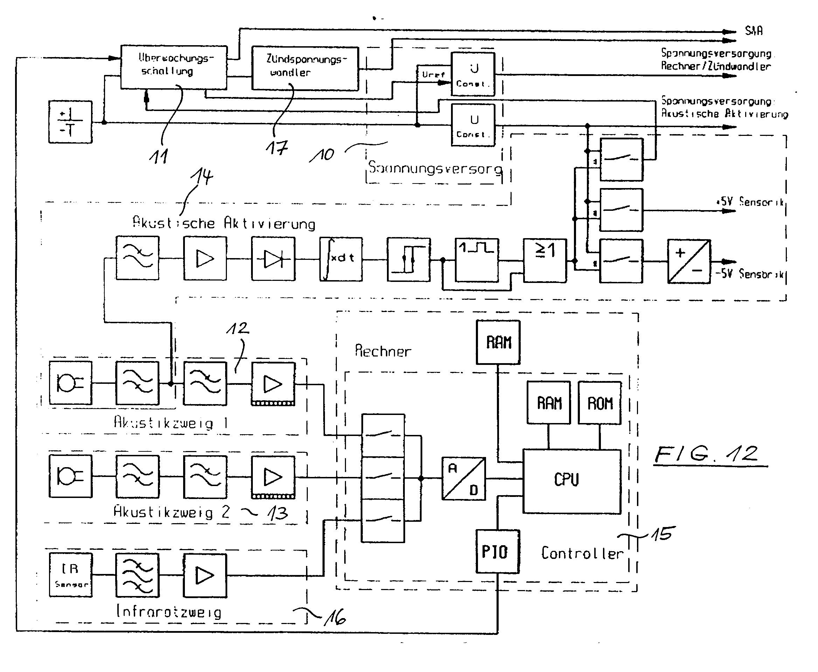

Figur 11 zeigt den Aufbau der Vorrichtung anhand eines Blockschaltbildes. Eine von einer Überwachungsschaltung 11 überwachte Spannungsversorgung 10 versorgt die Vorrichtung mit Spannung. Der Akustikzweig 12 ist dem Mikrofon M 1 zugeordnet und ist immer eingeschaltet. Wenn vom entsprechenden Mikrofon M 1 anhaltende Geräusche registriert werden, die einem für Fahrzeuge typischen Frequenzbereich zuzuordnen sind, erfolgt über eine Stufe 14 eine akustische Aktivierung eines Rechners, zweiten Akustikzweiges 13, Infrarotzweiges 16 und Zündwandlers 17. Die Signale von beiden Akustikzweigen 12 und 13 sowie vom Infrarotzweig 16 werden einem Prozessor 15 zugeführt, der die Signalwerte einer Korrelationsanalyse unterwirft. Wenn die Korrelationsfunktion einen definierten Schwellwert überschreitet, wird der Zündspannungswandler 17 angesteuert, d.h. die Zündung der Mine "akustisch" freigegeben.

Figur 12 zeigt den genaueren Aufbau der Vorrichtung. Hierbei besitzt der erste Akustikzweig 12 ein Mikrofon, einen Hochpass, einen Tiefpass und einen geregelten Verstärker. In gleicher Weise ist der zweite Akustikzweig 13 aufgebaut. Der Infrarotzweig besteht aus einem Infrarotsensor, einem Bandpass und einem Verstärker. Die entsprechenden Signale werden über Schalter dem Prozessor 15 zugeführt, der einen A/D-Wandler, 2 RAM's, einen ROM sowie eine CPU besitzt.

Die Stufe 14 "akustische Aktivierung" umfaßt einen Tiefpass, einen Verstärker, einen Gleichrichter, einen Integrator, einen Schmitt-Trigger, einen monostabilen Multivibrator, ein ODER-Glied sowie entsprechende Schalter und einen U-Inverter.

## Patentansprüche

1. Vorrichtung für die Zielerkennung und Zündauslösung von abzufeuernden Horizontal-Minen für die Panzerabwehr in einem Zielgebiet, mit
zwei Mikrofonen (M1, M2), die für Panzergeräusche empfindlich sind, und
einer elektronischen Auswerteeinrichtung,
wobei die Mikrofone (M1, M2) auf das Zielgebiet gerichtet sind, die elektronische Auswerteeinrichtung nach Maßgabe einer Korrelationsfunktion für die akustischen, von den beiden Mikrofonen aufgenommenen Signale einen Bereich ausgeprägter, einen vorgegebenen Schwellwert übersteigender Korrelation und/oder zunehmender Korrelation (d. h. Überschreitung eines vorgegebenen Korrelationsgradienten) ermittelt und die elektronische Auswerteeinrichtung die Zündung auslöst,
dadurch gekennzeichnet, daß
ein Infrarotsensor (S), dessen Richtstrahl auf das Zielgebiet gerichtet ist, mit gegenüber der Breite des Zielgebietes schmaler Richtkeule, in deren Richtung die Horizontal-Mine (1) abfeuerbar ist, vorgesehen ist,
der Richtstrahl des Infrarotsensors (S) in der Mitte der Mikrofone (M1, M2) verläuft und
die Zündung nur ausgelöst wird, wenn außerdem der Infrarotsensor (S) anspricht.

2. Vorrichtung nach Anspruch 1, dadurch gekennzeichnet, daß die Mikrofone (M1, M2) achsparallel auf das Zielgebiet gerichtet sind.

3. Vorrichtung nach Anspruch 2, dadurch gekennzeichnet, daß die Richtkeule des Infrarotsensors (S) parallel zu den Achsen der Mikrofone (M1, M2) verläuft.

4. Vorrichtung nach einem der vorangehenden Ansprüche, dadurch gekennzeichnet, daß im Einsatzfall (d.h. nach Auslegung und Scharfmachen der Horizontal-Mine (1)) in einer ersten Betriebsphase nur eines der Mikrofone (M1) und ein Teil der elektronischen Auswerteeinrichtung eingeschaltet sind, bis ein panzertypisches Schallsignal ermittelt wird, daß die eingeschaltete elektronische Auswerteeinrichtung bei Ermittlung eines panzertypischen Schallsignals das zweite Mikrofon (M2) und den übrigen Teil der elektronischen Auswerteeinrichtung einschaltet und daß die elektronische Auswerteeinrichtung den Infrarotsensor (S) zuschaltet (akustisch freigibt), wenn der vorgegebene Schwellwert der Korrelation bzw. des Korrelationsgradienten überschritten wird.

5. Vorrichtung nach einem der vorangehenden Ansprüche, dadurch gekennzeichnet, daß die Mikrofone (M1, M2) in einer horizontalen Ebene neben der Horizontal-Mine (1) und der Infrarotsensor (S) oberhalb der Horizontal-Mine (1) zwischen den Mikrofonen angeordnet sind.

6. Vorrichtung nach einem der vorangehenden Ansprüche, dadurch gekennzeichnet, daß die Mikrofone als Richtmikrofone mit ein Zielfeld definierenden Richtcharakteristiken ausgebildet sind und ein rechteckiges Zielfenster definieren.

7. Vorrichtung nach einem der vorangehenden Ansprüche, dadurch gekennzeichnet, daß der Abstand der Mikrofone (M1, M2) voneinander etwa 0,5 m beträgt.

## Claims

1. A device for the detection of objects and for the initiation of firing of horizontal mines suitable for the defence against tanks in a target area, said device comprising
   two microphones (M1, M2) which are sensitive with regard to tank noise and,
   an electronic evaluation means,
   wherein the microphones (M1, M2) are directed to the target area, the electronic evaluation means, according to a correlation function for the acoustic signals received by both microphones, determines a range of distinct correlation exceeding a predetermined threshold and/or of increasing correlation (i.e. exceeding a predetermined correlation gradient) and initiates the firing,
   characterized in that,
   an infrared sensor (S) is provided which has a directional beam directed to the target area and a directional characteristic which is narrow with respect to the width of the target area, the horizontal mine (1) being adapted to be fired in the direction of the directional characteristic of the directional beam,
   the directional beam of the infrared sensor (S) extends in the middle of the microphones (M1, M2), and the firing is initiated only if the infrared sensor (S) additionally reacts.

2. The device according to claim 1, characterized in that the microphones (M1, M2) are directed towards the target area with their respective axes parallel to one another.

3. The device according to claim 2, characterized in that the directional characteristic of said infrared sensor (S) extends in parallel to the axes of said microphones (M1, M2).

4. The device according to one of the preceding claims, characterized in that, in the active case (i.e. after installation and activation of the horizontal mine (1)), only one microphone (M1) and a portion of said electronic evaluation means are switched on in a first operational phase until a sound signal which is typical for tanks is detected, that, upon detection of a sound signal typical for tanks, the switched-on electronic evaluation means switches on the second microphone (M2) and the remaining portion of the electronic evaluation means, and in that the electronic evaluation means switches on the infrared sensor (S) (acoustically initiates the same) if the predetermined threshold of the correlation or of the correlation gradient is exceeded.

5. The device according to one of the preceding claims, characterized in that the microphones (M1, M2) are located in a horizontal plane adjacent to the horizontal mine (1), and in that the infrared sensor (S) is located above the horizontal mine (1) between the microphones.

6. The device according to one of the preceding claims, characterized in that the microphones are directional microphones with directional characteristics defining a target area, and in that the microphones define a rectangular target window.

7. The device according to one of the proceeding claims, characterized in that the distance between the microphones (M1, M2) is about 0,5 m.

**Revendications**

1. Dispositif de reconnaissance de cible et de mise à feu de mines horizontales de défense antichars sur un terrain d'objectifs, équipé de deux microphones (M1, M2) sensibles au bruit de chars et d'un système d'ajustage électronique, où les deux microphones (M1, M2) sont orientés vers le terrain d'objectifs, le système d'ajustage électronique définit, selon une fonction de corrélation, une gamme de corrélation caractéristique allant au-delà d'une valeur seuil prédéfinie et/ou croissante (C-à-d. dépassant un gradient de corrélation prédéfini) pour les signaux acoustiques perçus par les deux microphones et le système d'ajustage électronique déclenche la mise à feu, caractérisé en ce qu'est prévu un détecteur d'infrarouge (S) dont le faisceau de pointage est dirigé vers le terrain d'objectifs à lobe de pointage étroit comparativement à la largeur du terrain d'objectifs, en direction duquel la mise à feu de la mine horizontale (1) peut être effectuée, le faisceau de pointage du détecteur d'infrarouge (S) s'étend au milieu des microphones (M1, M2) et la mise à feu n'est effectuée que lorsque le détecteur d'infrarouge réagit de surcroît.

2. Dispositif selon revendication 1, caractérisé en ce que les microphones (M1, M2) sont orientés parallèlement à l'axe vers le terrain d'objectifs.

3. Dispositif selon revendication 2, caractérisé en ce que le lobe de pointage du détecteur d'infrarouge (S) s'étend parallèlement aux axes des microphones (M1, M2).

4. Dispositif selon l'une quelconque des revendications précédentes, caractérisé en ce que, en cas d'attaque (C-à-d. après la pose et l'amorçage de la mine horizontale (1)), au cours d'une première phase de fonctionnement, seul un des microphones (M1) et une partie du système d'ajustage électronique sont branchés jusqu'à détection d'un signal acoustique caractéristique d'un char, en ce que, lors de la détection d'un signal acoustique caractéristique d'un char, la système d'ajustage électronique qui est branché connecte le second microphone (M2) ainsi que l'autre partie du système d'ajustage électronique et en ce que le système d'ajustage électronique met le détecteur d'infrarouge (S) en circuit (déblocage acoustique) lorsque la valeur seuil prédéfinie de la corrélation ou du gradient de corrélation est dépassée.

5. Dispositif selon l'une quelconque des revendications précédentes, caractérisé en ce que les microphones (M1, M2) sont agencés dans un plan horizontal à côté de la mine horizontale (1) et le détecteur d'infrarouge (S), au-dessus de la mine horizontale (1) entre les deux microphones.

6. Dispositif selon l'une quelconque des revendications précédentes, caractérisé en ce que les microphones sont conçus comme des microphones de pointage, avec des caractéristiques de pointage qui définissent un champ-cible, et définissent un cadrecible rectangulaire.

7. Dispositif selon l'une quelconque des revendications précédentes, caractérisé en ce que l'écart entre les deux microphones (M1, M2) s'élève à environ 0,5 m.

_Fig. 1_

M1    M2

S

1

_Fig. 2_

S

3    2

Fig. 3

_Fig. 4_

Phase 1    Phase 2    Phase 3

S1    S2    S1    S2    S1    S2    S1

M1    M2

S    1

Fig. 5

Fig. 6

EP 0 414 203 B1

Fig. 7

S1

S2

Fig. 8

Fig. 9

Fig. 10

FIG. 11

Überwachungs-schaltung

Zündspannungs-wandler

SAA

Spannungsversorgung Rechner/Zündwandler

Uref

U Const.

U Const.

Spannungsversorgung Akustische Aktivierung

11

17

10

Spannungsversorg.

14

Akustische Aktivierung

$\int x\,dt$

≥1

+5V Sensorik

+ / −

−5V Sensorik

RAM

Rechner

12

Akustikzweig 1

RAM   ROM

FIG. 12

CPU

A D

Akustikzweig 2   13

15

PIO   Controller

IR Sensor

Infrarotzweig   16